# EUROPEAN PATENT SPECIFICATION

(11) **EP 2 414 487 B1**
(45) Date of publication and mention of the grant of the patent: **18.11.2020**
(21) Application number: 09789572.6
(22) Date of filing: 03.04.2009
(51) Int. Cl.: C10G 7/04, C10G 33/04, B01D 17/04

(54) **DEMULSIFICATION COMPOSITIONS AND METHODS FOR DEMULSIFYING AND SEPARATING AQUEOUS EMULSIONS**
DEMULGIERUNGSZUSAMMENSETZUNGEN UND VERFAHREN ZUM DEMULGIEREN UND TRENNEN VON WÄSSRIGEN EMULSIONEN
COMPOSITIONS DE RUPTURE D'ÉMULSIONS ET PROCÉDÉS POUR LA RUPTURE ET LA SÉPARATION D'ÉMULSIONS AQUEUSES

(43) Date of publication of application: 08.02.2012
(73) Proprietor: Dow AgroSciences LLC, Indianapolis IN 46268-1054 (US)
(72) Inventor: REY, Paul, Coraopolis PA 15108 (US); CEPLECHA, Steven, P., Harbor Beach MI 48441 (US); SUNDERLIK, David, M., Washington Township MI 48094 (US)
(74) Representative: Forresters IP LLP
(86) International application number: PCT/US2009/039374
(87) International publication number: WO 2010/114552

(56) References cited:
- WO-A1-2007/067728
- US-A- 4 596 653
- US-A- 4 888 107
- US-A- 5 004 559
- US-A- 5 098 979
- US-A- 5 153 294
- US-A1- 2002 129 542
- US-A1- 2007 299 143

## Description

### I. FIELD OF THE INVENTION

The present invention relates to compositions comprising quaternary organopolysiloxanes that can be useful for demulsifying and separating aqueous emulsions and water-in-oil emulsions formed during processing of organic materials such as bioproducts.

### II. TECHNICAL CONSIDERATIONS

Bioprocesses can be used to produce a wide variety of bioproducts, such as pharmaceuticals, insecticides, food additives, solvents, fuels, etc. Bioprocesses can utilize renewable feedstock sources such as corn, grain, algae, and other naturally occurring organic sources, and offer the potential for an environmentally friendly and less costly alternative to conventional synthesis routes that rely on petroleum-based feedstocks. The ability to produce a valuable end product via a biological process, using microorganisms such as bacteria, fungi, mold, etc., is proving to be a promising approach for a growing number of derived products.

Bioproducts such as antibiotic pharmaceuticals (for example penicillin) or substances obtained from microorganisms such as bacteria, algae or fungi (for example spinosyns, streptomycin, erythromycin, efrotomycin, etc.), can be produced by fermentation of a culture of microorganisms and/or enzymes in a nutrient-rich media. The bioprocess produces a bio-broth comprising a complex mixture of organic and inorganic compounds such as the valuable bioproduct, the biomass of microorganisms or enzymes, unconverted nutrient medium, fats, proteins, carbohydrates, amino acids, water and surfactant. Thus, the desired bioproduct must be extracted from the undesirable components of the bio-broth.

The separation of the selective components from bio-broths is often performed using liquid-liquid extractions. An extracting solvent, typically a water immiscible organic solvent such as amyl acetate, methyl ethyl ketone, methyl isobutyl ketone, amyl alcohol, butyl alcohol, toluene, heptane or benzyl alcohol, is added to extract the desired bioproduct from the aqueous phase to the organic phase, and the phases are separated. The broth components can form a stable emulsion as the broth and solvent are mixed which is difficult to separate by physical means, for example mechanical separation devices such as settlers, decanters and centrifuges. The resulting emulsion can occur as a dispersion of an organic phase within the aqueous phase, a dispersion of the aqueous phase within the organic phase, or both types of dispersions can be present. The dispersed material, including organics such as microorganisms, enzymes, proteins, lipids and carbohydrates, can possess a net negative charge or exhibit both polar and non-polar characteristics and be difficult to separate. These types of molecules can form hydrogen bonds with polar solvents, such as the polar aqueous phase, while having non-polar regions which can be soluble in organic solvent present in the less polar or non-polar organic phase. This results in an emulsion which is relatively stable and difficult to separate.

Nevertheless, depending on the components, some emulsions eventually break by themselves, that is, such emulsions have only "temporary stability" and over time and with the aid of gravity or centrifugation, the emulsion separates into distinct layers. More commonly, a demulsifier is added to encourage or initiate separation by gravity or centrifugation. Sodium chloride or another inorganic salt or an organic demulsifier such as AKZO D5430 quaternary fatty acid amine (commercially available from Akzo Nobel Chemical, Inc.), or KR-L255 alkylphenol-formaldehyde resin (commercially available from Kroff Chemical Co.) can be employed as a demulsifier.

Whether treated mechanically or chemically, upon separation, a solvent phase and an aqueous phase are formed. Optionally, a solid phase can be present. The solvent phase can comprise the desired bioproduct, solvent and small amounts of water and other impurities, such as organic material, the structure of which may be similar to that of the desired bioproduct and other undesirable components dissolved in the solvent. The aqueous phase can comprise the remaining components, including the biomass of the microorganisms or enzymes, and there may be a small amount of the desired bioproduct dissolved in the water and contained in the biomass. Alternatively, the desired bioproduct can be present in the aqueous phase rather than in the solvent phase.

The solvent phase may be cleaned further after separation from the aqueous phase by performing additional extractions that can include adjusting the process conditions, for example pH, temperature, or the addition of other solvents to drive the equilibrium in the desired direction to enhance the isolation of the desired bioproduct. If the addition of water forms a secondary emulsion, separation may be accomplished as described for the first emulsion. When the phase containing the desired bioproduct has been cleaned to the desired level, excess solvent or water, depending on the phase in which the bioproduct is present, can be removed by evaporation.

Conventional methods for demulsification and separation of phases have several drawbacks. For example, although inorganic salts such as sodium chloride are routinely used as demulsifiers, the phase separation can take place more slowly than desired, and the separation tends to involve a relatively large, indistinct interface, with poor segregation of components into the separate phases. For example, a significant portion of the desired bioproduct is often entrapped within cells of the biomass. As a result, recovery of the bioproduct typically has been found to be as low as 80%.

Similar emulsions also may be encountered in other bioprocessing applications, wastewater treatment or oil recovery. For example, emulsions can form during liquid extraction of plant materials (such as plant oils) from plant tissues. In crude oil production processes, water-in-oil emulsions can form in the presence of naturally occurring polar surface-active molecules such as asphaltenes and resins; fine solids such as crystallized waxes, clays and scales; steam injection; and/or high shear conditions, for example at the wellhead in the choke valve.

Use of conventional demulsifiers, such as alkylphenol-formaldehyde resins which contain phenol groups, can pose environmental concerns. Such systems are often formulated with aromatic solvents to improve the flow properties of the demulsifier, however, aromatic solvents such as benzenes, xylenes, naphtha or napthalenes also can present environmental concerns. As environmental regulations become more stringent, there is a need for more environmentally friendly or "green" demulsifiers which quickly separate phases in emulsions, provide a well-defined interface to facilitate separation and that do not require centrifugation to separate the phases of the emulsion.

US 4 888 107 A discloses a method for the de-emulsification of emulsion of water and crude oil.

US 2007/299143 A1 discloses a method for separating emulsions of oil and water. In another aspect, US 2007/299143 A1 relates to compositions comprising a demulsifying-effective amount of a silicone demulsifier, an aqueous phase and an oil phase.

US 4 596 653 A discloses a method for breaking emulsions.

US 5 004 559 A discloses a crude oil demulsifier based on polyoxyalkylene-polysiloxane block copolymers.

US 2002/129542 A1 discloses defoaming agents for petroleum products (such as diesel fuel and lubricating oils) and crude oil demulsifying agents, and methods for using them.

WO 2007/067728 A1 discloses a method for the separation of mixtures by the direct use of compositions comprising silicone surfactants and the mixture, that is to be separated.

US 5 098 979 A discloses a series of novel quaternary silicone polymers that have superior softening, conditioning and antistatic properties to skin and hair.

US 5 098 979 A discloses a series of novel quaternary silicone polymers.

US 5 153 294 A discloses a series of novel silicone ester quaternary silicone polymers useful in softening hair, fiber and conditioning skin.

### SUMMARY OF THE INVENTION

The present disclosure is as set out in the claims. In particular, the composition of the invention and the method of the invention are defined in the appended claims.

### BRIEF DESCRIPTION OF THE DRAWINGS

The foregoing summary, as well as the following detailed description, will be better understood when read in conjunction with the appended drawings. In the drawings:

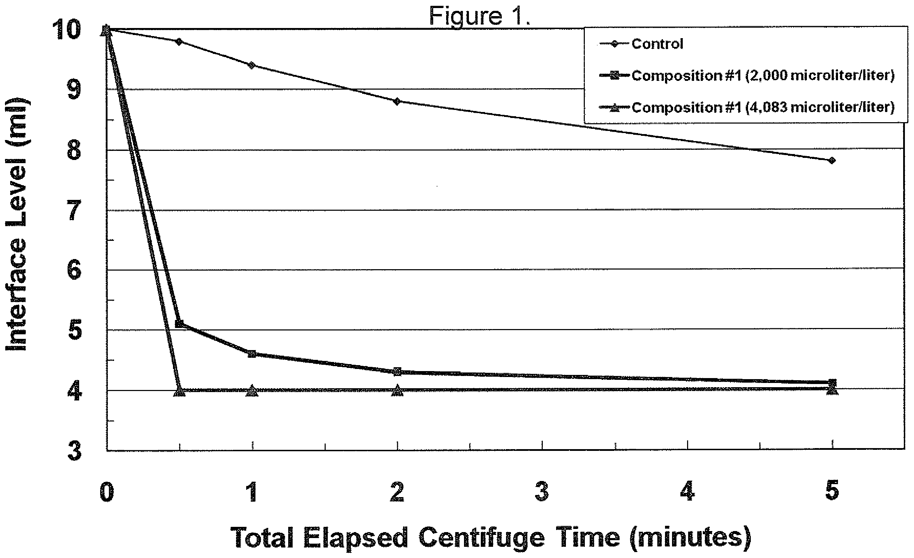

Fig. 1 is a graph of phase separation as a function of total elapsed centrifuging time for a S. Spinosa fermentation broth using di-isobutyl ketone as extraction solvent, and a demulsifying composition including hexylene glycol carrier solvent and a quaternary organopolysiloxane salt according to the present disclosure compared to a similar demulsifying composition without the cationic quaternary organopolysiloxane salt;

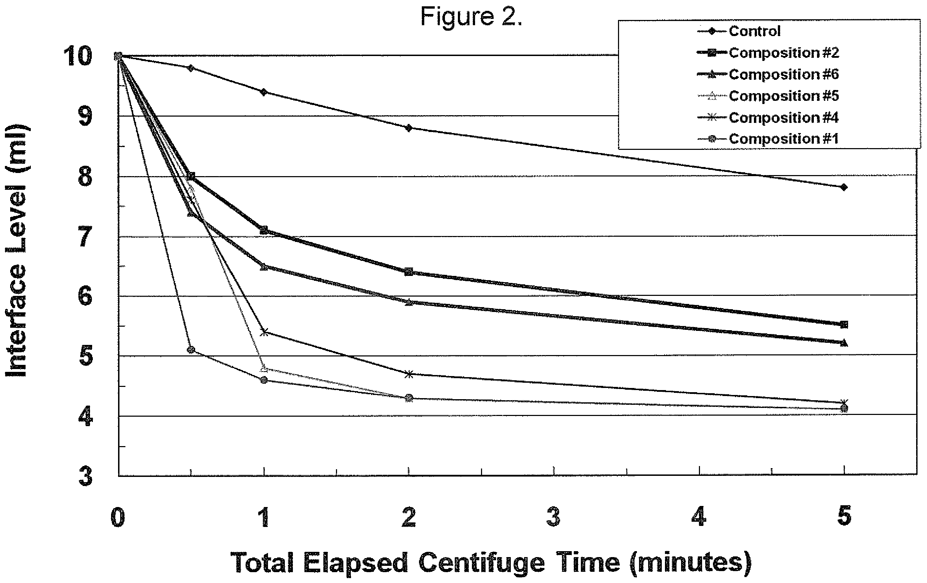

Fig. 2 is a graph of phase separation as a function of total elapsed centrifuging time for a S. Spinosa fermentation broth using di-isobutyl ketone as extraction solvent, and a demulsifying composition including hexylene glycol and/or water as a carrier solvent and a quaternary organopolysiloxane salt and a similar demulsifying composition including a quaternary organopolysiloxane salt and a quaternary epihalohydrin/polyamine copolymer, according to the present disclosure; and

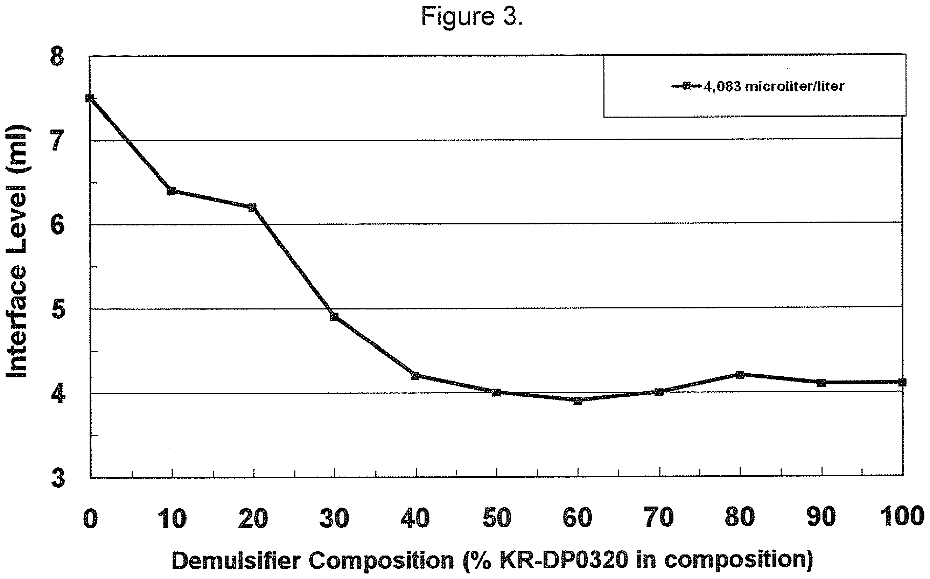

Fig. 3 is a graph of phase separation at 1 minute elapsed centrifuging time for a S. Spinosa fermentation broth using di-isobutyl ketone as extraction solvent, and demulsifying compositions including a solvent mixture of hexylene glycol and water and a varying ratio of quaternary organopolysiloxane salt to quaternary epihalohydrin/polyamine copolymer, as described in Table 3, according to the present disclosure.

### DETAILED DESCRIPTION

As used herein, "alkyl" means an aliphatic hydrocarbon group which may be straight or branched and comprising about 1 to about 20 carbon atoms in the chain. Non-limiting examples of suitable alkyl groups contain about 1 to about 18 carbon atoms in the chain, or about 1 to about 6 carbon atoms in the chain. "Branched" means that one or more lower alkyl groups such as methyl, ethyl or propyl, are attached to a linear alkyl chain. "Lower alkyl" or "short chain alkyl" means a group having about 1 to about 6 carbon atoms in the chain which may be straight or branched. Non-limiting examples of suitable alkyl groups include methyl, ethyl, n-propyl, isopropyl and t-butyl.

"Alkylene" means a difunctional group obtained by removal of a hydrogen atom from an alkyl group that is defined above. Non-limiting examples of alkylene include methylene, ethylene and propylene.

"Aryl" means an aromatic monocyclic or multicyclic ring system comprising about 6 to about 14 carbon atoms, or about 6 to about 10 carbon atoms. Non-limiting examples of suitable aryl groups include phenyl and naphthyl.

"Heteroaryl" means an aromatic monocyclic or multicyclic ring system comprising about 5 to about 14 ring atoms, or about 5 to about 10 ring atoms, in which one or more of the ring atoms is an element other than carbon, for example nitrogen, oxygen or sulfur, alone or in combination. Non-limiting examples of suitable heteroaryls include pyridyl, pyrazinyl, furanyl, thienyl, pyrimidinyl, pyridone, isoxazolyl, isothiazolyl, oxazolyl, thiazolyl, pyrazolyl, furazanyl, pyrrolyl, pyrazolyl, triazolyl, 1,2,4-thiadiazolyl, pyrazinyl, pyridazinyl, quinoxalinyl, phthalazinyl, oxindolyl, imidazo[1,2-a]pyridinyl, imidazo[2,1-b]thiazolyl, benzofurazanyl, indolyl, azaindolyl, benzimidazolyl, benzothienyl, quinolinyl, imidazolyl, thienopyridyl, quinazolinyl, thienopyrimidyl, pyrrolopyridyl, imidazopyridyl, isoquinolinyl, benzoazaindolyl, 1,2,4-triazinyl, benzothiazolyl and the like. The term "heteroaryl" also refers to partially saturated heteroaryl moieties such as, for example, tetrahydroisoquinolyl, tetrahydroquinolyl and the like.

"Halogen" or "halo" means fluorine, chlorine, bromine, or iodine. In some non-limiting aspects of the present disclosure, the halogen groups are fluorine, chlorine or bromine.

It should also be noted that any carbon, as well as heteroatom, with unsatisfied valences in the text, schemes, examples and Table herein is assumed to have the sufficient number of hydrogen atom(s) to satisfy the valences.

When any variable (e.g., aryl, heterocycle, R², etc.) occurs more than one time in any constituent, its definition on each occurrence is independent of its definition at every other occurrence.

As used herein, the term "composition" is intended to encompass a product comprising the specified ingredients in the specified amounts, as well as any product which results, directly or indirectly, from the combination of the specified ingredients in the specified amounts.

As used herein, "formed from" or "prepared from" denotes open, e.g., "comprising", claim language. As such, it is intended that a composition "formed from" or "prepared from" a list of recited components be a composition comprising at least these recited components or the reaction product of at least these recited components, and can further comprise other, non-recited components, during the composition's formation or preparation.

As used herein, the term "polymer" means a substance, typically of large molecular mass, comprising structural units or monomers. Examples of polymers include oligomers, homopolymers and copolymers. The term "oligomer" means a polymer consisting of only a few monomer units up to about ten monomer units, for example a dimer, trimer or tetramer.

As used herein, "bioproduct" means a product prepared from, *inter alia,* an organic material. Non-limiting examples of bioproducts include pharmaceuticals, insecticides, food additives, solvents, fuels, etc. In some non-limiting aspects of the present disclosure, bioproducts can be produced by a biological process (bioprocess), using microorganisms such as bacteria, fungi, mold, etc. Bioprocesses can utilize renewable feedstock sources such as corn, grain, algae, and other naturally occurring organic sources.

The compositions and methods of the present disclosure can be useful in a wide variety of emulsion separation applications, non-limiting examples of which include bioprocessing applications such as separating bioproducts from an expended nutriment medium; preparation of organic materials such as ethanol, lactic acid, acetic acid, butanol, citric acid, glucose, and fructose; separating plant oils (such as soybean oil) from plant media or aqueous biomass; vitamin production; crude oil and natural gas production; oil reprocessing for fuel feedstock; fat, oil and grease (FOG) removal in wastewater applications; and oily waste treatment in steel mill, foundry and metal working applications.

As used herein, "emulsion" means an intimate mixture comprising two or more liquid phases, such as oil and water, wherein the liquids are mutually insoluble and where either phase may be dispersed in the other. Optionally, a solid phase can be present. A bioproduct emulsion can comprise, for example, one or more bioproducts, microorganisms, enzymes, proteins, lipids, vitamins, carbohydrates, fats, amino acids or mixtures thereof, present in two or more liquid phases. The individual components of the bioproduct emulsion can be present independently in one or more of the liquid phases.

A stable oil-in-water emulsion is a colloidal system of electrically charged oil droplets surrounded by an ionic environment. For example, in an oily waste emulsion in which oil is dispersed in a water phase, the oils can be any hydrocarbon or organic fluid, such as waste oil, lubricants, cutting fluids, heavy hydrocarbons such as tars, grease, crude oils, diesel oils, and light hydrocarbons such as gasoline, kerosene and jet fuel. The concentration of oils in the wastewater can range from a few ppm up to about 10 weight percent by volume or more.

Emulsions can be broken by chemical, physical or electrolytic means. The breaking of an emulsion to separate the components is referred to as demulsification or resolution. As used herein, "demulsifying" or "demulsification" means separating two or more components of an emulsion, such as separating an organic or oil phase from an aqueous or water phase. To break or separate an emulsion, the factors that stabilize the emulsion must be disrupted to allow the emulsified droplets to coalesce. The accumulated electric charges on the emulsified droplet can be neutralized by introducing a charge opposite to that of the droplet. The compositions of the present disclosure include cationic components which are capable of neutralizing negatively charged components of the emulsion, for example organic components such as microorganisms or organic matter.

While not intending to be bound by any theory, the treatment of emulsions according to the methods of the present disclosure is believed to comprise several steps: (1) orientation of the demulsifier at the water/solvent interface; (2) partial or complete neutralization of charged component(s) that stabilize the emulsion; (3) interference with the emulsifying properties of surface active agent(s) or other component(s) of the emulsion; and (4) rapid resolution of at least two distinct phases that are separable, for example by centrifugation, filtration or gravity.

The compositions of the present disclosure comprise at least one (one or more) cationic quaternary organopolysiloxanes and salts thereof. In some non-limiting aspects of the present disclosure, the quaternary organopolysiloxanes and salts are at least partially water soluble. As used herein with respect to the quaternary organopolysiloxanes and salts, "water soluble" means that the quaternary organopolysiloxane is capable of being at least partially or fully dissolved in water at ambient temperature (about 25°C). The solubility of a component of the compositions of the present disclosure, for example solubility of the quaternary organopolysiloxane, can be determined by adding 1.0 weight percent of the component to water at 25°C and mixing thoroughly (about 5 minutes) with a magnetic stirrer. The mixture is permitted to stand for 24 hours and the clarity and separation of components of the mixture is assessed by visual observation. A clear, generally haze-free solution is "water soluble", a hazy/turbid solution is "water dispersible" or "partially water soluble", and a mixture that separates into layers or has noticeable solid particulates is "water insoluble". The evaluation can be performed in the presence of up to 1.0 weight percent of a cosolvent, such as isopropyl alcohol, to aid in solubilization of the component. Alternatively, the same procedure can be performed using an organic solvent, such as toluene, instead of water to evaluate the component for lipophile solubility.

In some non-limiting aspects of the present disclosure, X⁻ is Cl⁻. In some non-limiting aspects of the present disclosure, R is

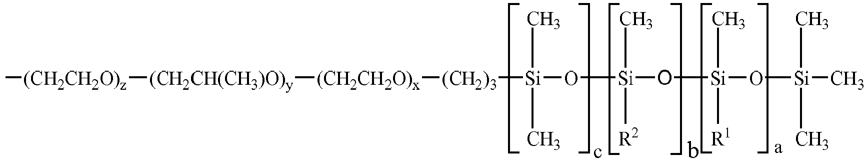

In some non-limiting aspects of the present disclosure, the quaternary organopolysiloxane(s) or salt(s) comprises up to about 100 weight percent of the composition, or about 5 to about 100 weight percent, or about 10 to about 30 weight percent or about 20 weight percent based upon the weight of (1) quaternary organopolysiloxane or salt and (2) quaternary epihalohydrin/polyamine copolymer (if present), and/or p(DADMAC) (if present) in the composition (e.g., not including solvent or carrier such as water).

In some aspects of the present disclosure, such as the Kroff products discussed above, the quaternary organopolysiloxane or salt thereof is present with at least one solvent. Non-limiting examples of suitable solvents include glycols such as ethylene glycol, propylene glycol, hexylene glycol, diethylene glycol, polyglycols such as polyethylene glycol and polypropylene glycol, polyols such as glycerol (glycerine) and short chain aliphatic alcohols such as methanol, ethanol and isopropyl alcohol, and mixtures thereof. The amount of solvent can range from about 10 to about 100 weight percent, or about 55 to about 90 weight percent, or about 70 to about 75 weight percent, based upon total weight of the organopolysiloxane and solvent. Quaternary polysiloxanes tend to be very viscous and generally require a solvent to improve their handling properties. In general, it is commercially desirable to limit the solvent content to a minimum that will provide the desired viscosity property of the product.

In some non-limiting aspects of the present disclosure, the compositions of the present disclosure comprise at least one cationic quaternary epihalohydrin/polyamine polymer or salt thereof. Suitable epihalohydrin/polyamine polymers can be prepared by the polymerization of at least one epihalohydrin, at least one alkylene diamine and at least one alkylene polyamine in which at least some of the nitrogen atoms of the copolymer have been quaternized. The quaternary epihalohydrin/polyamine polymer comprises or consists essentially of the following repeating units: 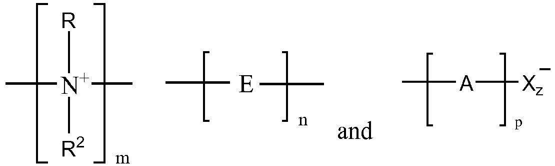 wherein R and R² are each independently selected from alkyl groups having 1 to 3 carbon atoms; E is the residue obtained after bifunctional reaction of a compound selected from the group consisting of epihalohydrins (such as epichlorohydrin or epibromohydrin), diepoxides (such as 1,4-butanediol-diglycidyl ether), precursors thereof and mixtures thereof; and A is the residue obtained after reaction of a polyfunctional polyamine selected from the group consisting of ammonia, primary amines, alkylene diamines of 2 to 6 carbon atoms, polyalkylpolyamines of the structure: 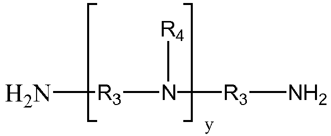 wherein y represents an integer of about 1 to 5, R₃ is an alkylene radical of about 2 to 6 carbon atoms, and R₄ is selected from the group consisting of hydrogen, alkyl of about 1 to 3 carbon atoms, and ω-aminoalkyls of about 2 to 6 carbon atoms, a polyglycolamine, for example having the structure: 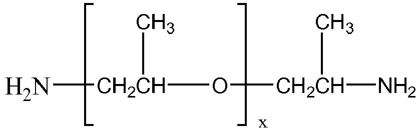 wherein x is an integer of about 1 to 5; piperazine heteroaryl diamines or aryl diamines.

X⁻ is an ion forming the anionic portion of the polyquaternary compound, m to p are integers which represent the molar quantities of amine reactants, the ratio of m to p being from 99:1 to 85:15; n represents the molar quantity of E forming the principal chain of the polyquaternary, the molar quantity represented by n being substantially equal to the sum of the molar quantities of m and p; the polyfunctional amine containing, in addition to the amount of E required for difunctional reaction therewith, an amount of E which is from zero to about the full functional equivalency remaining in A, the sum of m, n and p being such as to provide a polyquaternary compound which as a 37% aqueous solution, by weight, based on the total weight of the cationic portion of the polyquaternary compound has a viscosity at 25°C of at least 10 centistokes; and z is an integer such as to satisfy anion requirements of the polyquaternary compound. Non-limiting examples of such quaternary epihalohydrin/polyamine polymers and processes for making the same are set forth in U.S. Patent No. 3,738,945.

In some non-limiting aspects of the present disclosure, the quaternary epihalohydrin/polyamine polymer and salts thereof are condensation polymerization reaction products having a branched structure comprising or consisting essentially of the following repeating units: 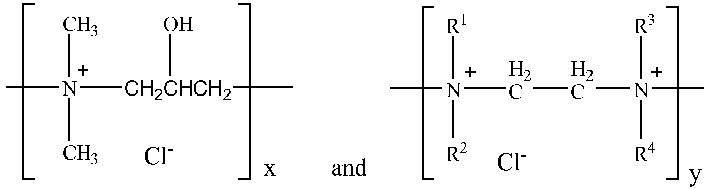 wherein each of R¹, R², R³ and R⁴ are independently selected from hydrogen or 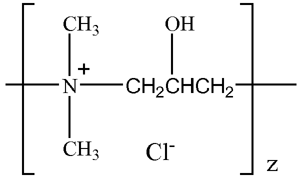 and wherein x ranges from about 50 to about 200, y ranges from 0 to about 10 and z ranges from about 50 to about 200.

In some aspects of the present disclosure, suitable quaternary epihalohydrin/polyamine polymers and salts thereof include liquid quaternary epihalohydrin/polyamine polymer solutions in water, such as those having C.A.S. Registry No. 42751-79-1. Non-limiting examples of liquid quaternary epihalohydrin/polyamine polymer solutions in water include for example KR-C1620, KR-C1630, KR-C1650 and KR-C1680 liquid polyamine solutions, commercially available from Kroff Chemical Co. In other aspects of the present disclosure, the quaternary epihalohydrin/polyamine polymer can have the C.A.S. Registry No. 25988-97-0.

In some aspects of the present disclosure, it is preferred that the quaternary epihalohydrin/polyamine polymer be NSF and/or GRAS approved for use in products for consumption by or application to humans. GRAS standards for such materials are set forth in §21 C.F.R. 570.30-570.35. The quaternary epihalohydrin/polyamine polymer can be present in a carrier or diluent, such as water. The amount of carrier can range from about 40 to about 70 weight percent, or about 45 to about 55 weight percent, or about 50 weight percent, based upon total weight of the quaternary epihalohydrin/polyamine polymer and carrier.

In some aspects of the present disclosure, the quaternary epihalohydrin/polyamine polymers have a weight average molecular weight of less than about 2,000,000 grams/mole, or less than about 1,000,000 grams/mole, or about 20,000 to about 300,000 grams/mole.

In some aspects of the present disclosure, the quaternary epihalohydrin/polyamine copolymer comprises up to about 95 weight percent of the composition, or about 5 to about 95 weight percent, or about 70 to about 90 weight percent or about 80 weight percent based upon the weight of (1) quaternary organopolysiloxanes and (2) quaternary epihalohydrin/polyamine copolymers, and/or p(DADMAC) (if present) in the composition (e.g., not including solvent or carrier such as water).

In some non-limiting aspects of the present disclosure, the compositions of the present disclosure comprise one or more (poly)diallyldimethylammonium halides such as diallyldimethylammonium chloride polymer (known as "p(DADMAC)", "p(DMDAAC)" or "p(DADM)"). Methods for preparing p(DADMAC)s are disclosed in U.S. Patent Nos. 4,092,467 and 4,151,202. Poly-dialkyldiallyl ammonium chloride, which is a polymer of dialkyldiallyl ammonium chloride and may be written poly-(dialkyldiallyl ammonium chloride), typically has a molecular weight of from about 10,000 to about 2,000,000 or more, and is discussed in U.S. Patent No. 3,782,546. Commercially available dimethyldiallyl ammonium chloride and polydimethyldiallyl ammonium chloride generally contain a mixture of mono and diallyl forms. Poly-dialkyldiallyl ammonium salts may be prepared by any of a number of known techniques. U.S. Patent No. 3,782,546 identifies several U.S. patents which discuss the preparation and use of poly-dialkyldiallyl ammonium chlorides. Non-limiting examples of suitable p(DADMAC)s include KR-C2320, KR-C2370, KR-C2553, KR-C2570 and KR-C2623, available from Kroff Chemical Co.

In some aspects of the present disclosure, the p(DADMAC) comprises up to about 95 weight percent of the composition, or about 5 to about 95 weight percent, or about 70 to about 90 weight percent or about 80 weight percent based upon the weight of (1) quaternary organopolysiloxanes or salts and (2) quaternary epihalohydrin/polyamine copolymers or salts (if present), and/or p(DADMAC) in the composition (e.g., not including solvent or carrier such as water).

The degree of quaternization of the quaternary organopolysiloxane, quaternary epihalohydrin/polyamine copolymer, and/or p(DADMAC) can be from about 25% to about 100%, or about 70% to about 90%, or about 75%, based on the number of nitrogen atoms quaternized. Thus, some or all of the nitrogen atoms of the above compounds or polymers may be quaternized. The quaternization product may be used directly as a demulsifier for resolving emulsions produced in preparation of pharmaceuticals by fermentation or in diluted form, such as an aqueous solution, for demulsification. Alternatively, the conjugate acid salts thereof may be used directly or in similar diluted form. Such salts may be formed by addition of an acid, such as hydrochloric acid, to the quaternized oxyalkylated amine.

The composition comprises quaternary organopolysiloxane(s) or salt(s), and in some aspects of the present disclosure can further comprise one or more of quaternary epihalohydrin/polyamine copolymer(s) or salt(s), and/or p(DADMAC). The quaternary organopolysiloxane(s) or salt(s), quaternary epihalohydrin/polyamine copolymer(s) or salt(s), and/or p(DADMAC) can be premixed prior to mixing with the emulsion, or added separately or sequentially in any order desired.

In some aspects of the present disclosure, other additives can be included in compositions of the present disclosure. Non-limiting examples of such additives include other demulsifiers that are chemically different from the demulsifiers discussed above (for example having at least one different atom or different molecular arrangement), surfactants or wetting agents such as nonionic or cationic surfactants, nonionic polysiloxanes, compatibilizers and coupling agents. Non-limiting examples of suitable additives include fatty amines such as ARMEEN® fatty amines commercially available from Akzo Nobel Surfactants, fatty amine polyglycol ethers, quaternary ammonium salts, oxyalkylated phenolic resins, alkoxylated alkylphenol formaldehyde resins, ethylene oxide/propylene oxide copolymers, polyoxyalkylene glycols, polyalkylene glycols, silicone polyethers, nonionic polysiloxanes such as Dow DM-2 polydimethylsiloxane or mixtures thereof. Non-limiting examples of suitable compatibilizers include low molecular weight alcohols such as butyl carbitol and phosphate esters.

Such additives can be present in an amount such that the additive comprises less than about 30 percent by weight, or less than about 15 percent by weight, or less than about 5 percent by weight, or less than about 3 percent by weight, based on the total weight of the composition. In some non-limiting aspects of the present disclosure, the aforementioned optional additives can be pre-mixed with the quaternary organopolysiloxane (and quaternary epihalohydrin/polyamine copolymer(s) or salt(s), and/or p(DADMAC)), if present, before being added to the emulsion, or the components can be added simultaneously or sequentially in any order desired.

The compositions of the present disclosure can be useful as demulsifiers in resolving emulsions. Non-limiting examples of such emulsions include those produced in preparation of bioproducts such an antibiotics, for example, penicillin or substances obtained from fungus (spinosads, streptomycin, erythromycin, efrotomycin, etc.), by fermentation in which a culture of microorganisms or enzymes in a nutriment medium, such as vegetable oil in a water base, ferments to produce a desired bioproduct. The emulsion can comprise one or more bioproducts, microorganisms, enzymes, proteins, lipids, vitamins, carbohydrates, fats, amino acids, organic solvents, emulsifiers, nutrient from the nutriment medium, particulate matter including enzymes or microorganisms, and various organic or inorganic compounds such as electrolytes, trace minerals and/or buffering agents. Such emulsions are produced in a broad range of pHs and the components are present in a variety of relative proportions.

In some aspects of the present disclosure, the emulsion can comprise fermentation products such as A83543 family of compounds, referred to as spinosyns, that are produced by certain strains of Saccharopolyspora spinosa. The previously disclosed naturally produced spinosyns have a 5,6,5-tricylic ring system, fused to a 12-membered macrocyclic lactone, a neutral sugar (rhamnose) and an amino sugar (forosamine). The known spinosyns have been referred to as factors or components, and each has been given an identifying letter designation, i.e., spinosyn A, B, etc. The compounds are useful for the control of arachnids, nematodes and insects, in particular Lepidoptera and Diptera species, are environmentally friendly and have a good toxicological profile. U.S. Patent No. 5,362,634 discloses spinosyns A, B, C, D, E, F, G, H, and J. WO 93/09126 discloses spinosyns L, M, N, Q, R, S, and T. WO 94/20518 discloses spinosyns K, O, P, U, V, W, and Y, and derivatives thereof. Other spinosyn compounds include those disclosed in WO 97/00265, and U.S. Patent No. 6,455,504 (Saccharopolyspora species designated LW107129 (NRRL 30141)).

Spinosyns are fermentation products produced by chemical mutants of actinomycetes soil bacterium *Saccharopolyspora spinosa.* The bacterium can be grown aerobically in an aqueous growth medium to produce biologically active metabolites called spinosyns. The aqueous growth medium can contain components such as proteins, carbohydrates, oils, and minerals, for example corn solids, cottonseed flour, soybean flour, glucose, methyl oleate and calcium carbonate. "Spinosad Crops", National Organic Standards Board Technical Advisory Panel Review (April 4, 2002). The spinosad fraction (about 85% spinosyn A and 15% spinosyn D) is soluble in organic solvents such as methanol and can be extracted from the biomass by centrifugation or filtering to remove solids, concentration by evaporation, conversion to salt by mixing with acidified water, and crystallized from the water by adding base to neutralize the solution. *Spinosad Crops* at page 1.

Similar emulsions, which also can be treated with the demulsifiers of this disclosure, may be the result of other bioprocessing applications, wastewater treatment, and oil recovery. Wastewater treatment can involve separating waste oil, lubricants and/or greases from industrial oily wastewater which include oil, dispersed solids and emulsified water, such as are produced in chemical processing, steel and aluminum industries, automotive industry, cotton and wool manufacturing processes, laundry industry and the refinery industry. Emulsified oil in wastewater is typically present in amounts of about several hundred to tens of thousands of ppm or more. The United States Environmental Protection Agency (EPA) and local governments have placed limits on the amount of oil and grease in water to be discharged into public drinking water supplies or waterways.

The compositions of the present disclosure can be environmentally desirable compared to conventional demulsifiers, such as alkylphenol-formaldehyde resins which can contain phenols.

The demulsifiers of the present disclosure can be remarkably fast acting, with application of a very small amount of the demulsifier producing a nearly immediate phase separation with an exceptionally clear, well-defined interface, and almost all of the desired product or bioproduct segregated into one distinct phase. As used herein, "interface level" means the surface between two immiscible phases determined by visual observation, as evidenced by different physical properties between the phases, for example different colors, different opacity, different turbidity, and/or different densities between the phases. The interface level can be determined by stirring an emulsion including demulsifier for about 5 minutes with a magnetic stirrer, then homogenizing using a high shear Turran mixer until a stable emulsion is formed. The emulsion is then stirred for about 15 minutes to verify the stability of the emulsion. A 10 ml sample of homogenized emulsion is placed in a conventional 15 ml conical centrifuge tube, placed in a centrifuge and spun down, generally for up to about 5 minutes at 3100 rpm. An example of a suitable centrifuge is an IEC Centra CL2 centrifuge which is available from Thermo Fisher Scientific, Inc. The measured phase separation results are normalized to a starting value of 10 ml and compared to the phase separations measured using the same process and bio-broth, but without the addition of the demulsifying agent. The interface level is measured as the visual boundary between the top layer (generally the solvent layer) and any material below the top layer (such as water, solids, and any unseparated solvent/water (rag layer)).

The amount of demulsifier used to treat the emulsion is an amount effective to at least partially separate an aqueous phase of the emulsion from an organic phase of the emulsion, and in some non-limiting aspects of the present disclosure can range from about 1 to about 200,000 ppm or more, or about 10 to about 50,000 ppm, or about 50 to about 50,000 ppm, or about 100 to about 20,000 ppm, or about 100 to about 10,000 ppm, or about 500 to about 10,000 ppm, or about 1,000 to about 5,000 ppm based upon the amount of emulsion to be treated. In some non-limiting aspects of the present disclosure, the amount of demulsifier can range from about 1 to about 200,000 or more microliters (µl) per liter of emulsion to be treated, or about 10 to about 50,000 µl/l, or about 50 to about 50,000 µl/l, or about 100 to about 20,000 µl/l, or about 100 to about 10,000 µl/l, or about 500 to about 10,000 µl/l, or about 1,000 to about 5,000 µl/l. The optimal proportion depends on the particular emulsion being treated. Such emulsions typically comprise about 2% by weight to about 75% by weight, often about 50% by weight water. Typically, some such emulsions have first been neutralized to a pH of from about 7 to about 7.4. However, other emulsions have other pHs, and it has been found that the demulsifiers of this disclosure are applicable over a wide pH range--at least from about 3 to about 11. If desired, the demulsifier may be mixed into the emulsion by shaking or stirring.

More specifically, upon application of a demulsifier of this disclosure to such emulsions, the emulsion usually separates immediately into distinct phases with a sharp, well-defined interface, and particulate matter in the emulsion being treated is sequestered into the aqueous phase. The phase separation can be essentially complete, with little or no residual emulsion remaining. Where the desired pharmaceutical or component resides is dependent on where and how the manufacturer manipulates the pH. For example, pH adjustment may cause the desired component to collect in the water phase, while a different pH adjustment may cause the desired component to collect in the organic phase.

In some non-limiting aspects of the present disclosure, the compositions and methods of the present disclosure can be used to separate bioproducts or pharmaceuticals, such as penicillin, from fermentation products or bio-broths.

In other non-limiting aspects of the present disclosure, the compositions and methods of the present disclosure can be used to separate plant oils which are dispersed in an aqueous biomass.

In some non-limiting aspects of the present disclosure, the compositions of the present disclosure can be used as demulsifiers in an effective amount to reduce or eliminate the need for centrifugation, which can significantly reduce processing, equipment costs and processing time. An effective amount to eliminate centrifugation can be about 25% to about 50% more than the amounts required for centrifugation, and can be the amounts of about 1 to about 200,000 ppm or more listed above, based upon the amount of emulsion to be treated.

The compositions of the present disclosure can include carrier solvents such as water, hexylene glycol, propylene glycol and isopropyl alcohol, which are more environmentally friendly and less volatile than carrier solvents typically used for commercially available demulsifiers, such as benzene, diethyl benzene, trimethyl benzene, xylenes, naphtha or naphthalenes.

In some non-limiting aspects of the present disclosure, the present disclosure provides methods for demulsifying an emulsion comprising an aqueous phase and an organic phase, comprising (a) adding an effective amount of a composition comprising at least one cationic quaternary organopolysiloxane or salt thereof, optionally with at least one quaternary epihalohydrin/polyamine copolymer, or optionally with at least one polydimethyldiallyl ammonium chloride polymer, to an emulsion comprising an aqueous phase and an organic phase. The aqueous phase and organic phase can be separated as discussed above, for example by gravity, centrifugation, etc.

In some aspects of the present disclosure, the present disclosure provides methods for demulsifying an emulsion produced in bioprocessing, comprising adding an effective amount of a demulsifier to an emulsion that comprises at least one bioproduct which is desired to be extracted from the emulsion, the demulsifier comprising at least one quaternary organopolysiloxane or salt thereof, optionally with at least one quaternary epihalohydrin/polyamine copolymer, and/or optionally with at least one polydimethyldiallyl ammonium chloride polymer as discussed above.

The following examples are not according to the invention. Unless otherwise indicated, all parts and percentages are by weight.

### EXAMPLES

### Example 1:

The phase separation of an emulsion including S. Spinosa fermentation broth with di-isobutyl ketone as extraction solvent was evaluated using demulsifying compositions of the present invention including either a cationic quaternary organopolysiloxane salt or a mixture of the cationic quaternary organopolysiloxane salt with a quaternary epihalohydrin/polyamine copolymer. Hexylene glycol, water and blends thereof were used as the carrier solvent for the demulsifying composition. The fermentation broths used in the examples below comprised various proteins from natural sources, carbohydrates, lipids, trace minerals and/or electrolytes for pH buffering.

The fermentation broth was adjusted with ammonium hydroxide to an alkaline value of approximately pH 9.8. The pH-adjusted fermentation broth was mixed with di-isobutyl ketone solvent at a ratio of 2 parts bio-broth to 3 parts solvent. To this mixture, a predetermined amount of a demulsifying composition of the present invention including either a quaternary organopolysiloxane salt or a mixture of a quaternary organopolysiloxane salt with a quaternary epihalohydrin/polyamine copolymer was added. For comparison, a Control composition was prepared using the same components as the demulsifying composition, except without the quaternary organopolysiloxane salt and quaternary epihalohydrin/polyamine copolymer. The components of each demulsifier composition are set forth in Table 1 and Table 2 below.

**Table 1**

| Product | Demulsifier (weight %) | Solvent (weight %) |
|---|---|---|
| KR-DP0320 | 70% quaternary organopolysiloxane salt, molecular weight ∼26000 | 30% Hexylene Glycol |
| KR-DP0356 | 70% quaternary organopolysiloxane salt, molecular weight ∼2600 | 30% Propylene Glycol |
| KR-DP0319 | 70% quaternary organopolysiloxane salt, molecular weight ∼500 | 30% Hexylene Glycol |
| KR-DP0324 | 70% quaternary organopolysiloxane salt, molecular weight ∼4300 | 30% Hexylene Glycol |
| KR-C1630 | 50% quaternary epihalohydrin/polyamine copolymer, molecular weight ∼33,000 | 50% Water |
| KR-C2570 | 40% polydimethyldiallyl ammonium chloride, molecular weight ∼250,000 | 60% Water |

**Table 2**

| Composition # | (wt. %) | Component #1 | (wt. %) | Component #2 |
|---|---|---|---|---|
| 1 | 100 | KR-DP0320 | 0 | |
| 2 | 100 | KR-C1630 | 0 | |
| 3 | 100 | KR-C2570 | 0 | |
| 4 | 75 | KR-DP0320 | 25 | KR-C1630 |
| 5 | 50 | KR-DP0320 | 50 | KR-C1630 |
| 6 | 25 | KR-DP0320 | 75 | KR-C1630 |
| 7 | 50 | KR-DP0320 | 50 | KR-C2570 |

The resulting mixture was stirred with a magnetic stirrer for approximately 5 minutes. The mixture was then homogenized using a high shear Turrax mixer until a stable emulsion was formed. This emulsion was then stirred for approximately 15 minutes to verify the stability of the emulsion.

A 10 ml sample of each emulsion was taken and placed into a conventional 15 ml conical centrifuge tube and spun down in a centrifuge at 3100 rpm, measuring the phase separation at pre-determined time intervals. The centrifuge was an IEC Centra CL2 centrifuge available from Thermo Fisher Scientific, Inc. For the intent of these Examples, 5 minutes represented the maximum practical time for centrifugation; phase separation is essentially completed for the test condition and minimal further phase separation is anticipated beyond 5 minutes. The measured phase separation results were than normalized to a starting value of 10 ml and compared to the phase separations measured using the same process and fermentation broth, but without the addition of the de-emulsifying agent. This comparison was made to show that the quaternary organopolysiloxane salt and quaternary epihalohydrin polyamine copolymer enhanced the phase separation rate. This experiment was repeated numerous times using different production runs of the fermentation broth and varying dosage levels of the cationic siloxane.

Fig. 1 is a graph of phase separation as a function of total elapsed centrifuging time for a S. Spinosa fermentation broth using di-isobutyl ketone as extraction solvent, and a demulsifying composition (Composition #1) according to the present invention compared to a similar demulsifying composition without the quaternary organopolysiloxane salt (Control). On the scale, a 4.0 ml interface reading was considered to be essentially complete separation.

As shown in Fig. 1, Composition #1 provided faster and more complete phase separation compared to the Control, which did not contain a quaternary organopolysiloxane salt. Also, the rate and completeness of the separation improved with increased dosage of the quaternary organopolysiloxane salt.

Fig. 2 is a graph of the phase separation as a function of total elapsed centrifuging time for a S. Spinosa fermentation broth using di-isobutyl ketone as extraction solvent, and demulsifying compositions containing a quaternary organopolysiloxane salt and a quaternary epihalohydrin polyamine copolymer, according to Table 2. A demulsifier dosage of 2,000 µl demulsifier composition per liter of broth was used in these tests.

As shown in Fig. 2, Compositions #4, 5, & 6, provided faster and more complete phase separation compared to the similar Control and to the broth treated with Composition #2 which did not contain a quaternary organopolysiloxane salt.

### Example 2:

The phase separation of a S. Spinosa fermentation broth with di-isobutyl ketone as extraction solvent was evaluated using the same procedure described in Example 1. Demulsifying compositions of the present invention including a mixture or blend of KR-DP0320 quaternary organopolysiloxane salt, with KR-C1620 quaternary epihalohydrin/polyamine copolymer composition. The interface levels after 1 minute of centrifugation for various blend ratios are compiled in Table 3 and Fig. 3. The compositions containing a quaternary organopolysiloxane salt demonstrated a faster separation rate and improved completeness of phase separation. The quaternary epihalohydrin polyamine alone exhibited limited demulsification performance on the S. Spinosa broth, whereas addition of the quaternary organopolysiloxane salt markedly improved the separation efficiency of the demulsifier.

**Table 3**

| Demulsifier composition | | Interface Level (ml) Dosage = 4083 µl of demulsifier composition per liter of broth |
|---|---|---|
| KR-DP0320 (wt%) | KR-C1630 (wt%) | |
| 0 | 100 | 7.5 |
| 10 | 90 | 6.4 |
| 20 | 80 | 6.2 |
| 30 | 70 | 4.9 |
| 40 | 60 | 4.2 |
| 50 | 50 | 4.0 |
| 60 | 40 | 3.9 |
| 70 | 30 | 4.0 |
| 80 | 20 | 4.2 |
| 90 | 10 | 4.1 |
| 100 | 0 | 4.1 |

### Example 3:

The phase separation of a S. Spinosa fermentation broth with di-isobutyl ketone as extraction solvent was evaluated using the same procedure described in Example 1. Demulsifying compositions of the present invention included a mixture or blend of a quaternary organopolysiloxane salt with either a quaternary epihalohydrin polyamine or a p(DADMAC). The interface levels after 1 minute of centrifugation for various blend ratios are compiled in Table 4. The compositions containing a quaternary organopolysiloxane salt demonstrated a faster separation rate and improved completeness of phase separation. Either a quaternary epihalohydrin polyamine or a p(DADMAC) alone exhibited limited demulsification performance on the S. Spinosa broth, whereas addition of a quaternary organopolysiloxane salt markedly improved the separation efficiency of the demulsifier.

**Table 4**

| | Dosage in µl of Demulsifier Composition per liter of broth | | | |
|---|---|---|---|---|
| Demulsifier Composition | 2000 | 4083 | 6258 | 8534 |
| | Interface Level (ml) | | | |
| #2 | 7.1 | 7.5 | 7.1 | 6.6 |
| #3 | 7.1 | 8.3 | 7.6 | 7.7 |
| #5 | 4.9 | 4.0 | 3.8 | - |
| #7 | 5.9 | 3.9 | 3.9 | - |
| #1 | 4.7 | 4.1 | 4.0 | 4.0 |

### Example 4:

The phase separation of a S. Spinosa fermentation broth with di-isobutyl ketone as extraction solvent was evaluated using the same procedure described in Example 1. Demulsifying compositions of the present invention included a blend of KR-DP0356, a quaternary organopolysiloxane salt, with, KR-C1630, a quaternary epihalohydrin polyamine copolymer. Propylene glycol and water were the carrier solvents for the demulsifying composition. The interface level after 1 minute and 5 minutes of centrifugation, respectively, for various treatment rates is compiled in Table 6. The composition components and amounts are as set forth in Tables 5 and 6 below.

**Table 5**

| Composition # | (wt. %) | Component #1 | (wt. %) | Component #2 |
|---|---|---|---|---|
| 8 | 20 | KR-DP0356 | 80 | KR-C1630 |

**Table 6**

| Composition #8 Dosage (µl of demulsifier composition per liter of broth) | Interface Level (ml) after 1 minute | Interface Level (ml) after 5 minutes |
|---|---|---|
| 500 | 9.4 | 7.2 |
| 1,021 | 8.9 | 7.2 |
| 1,565 | 7.5 | 6.2 |
| 2,134 | 6.7 | 5.3 |
| 2,730 | 6.0 | 4.8 |
| 3,357 | 5.7 | 4.6 |
| 4,612 | 4.4 | 4.3 |
| 5,866 | 4.2 | 4.1 |

As shown in Table 6, varying amounts of a fixed blend of quaternary organopolysiloxane salt and quaternary epihalohydrin/polyamine copolymer according to the present invention provided good phase separation. As the dosage was increased, the rate of phase separation increased and the completeness of phase separation improved.

### Example 5:

The phase separation of a Saccharomyces cerevisiae fermentation bio-broth using toluene as the extraction solvent was evaluated. This bio-broth was mixed with toluene at a ratio of 1 part broth to 1 part solvent. The demulsifying composition of the present invention contained KR-DP0320 quaternary organopolysiloxane salt and a carrier solvent, hexylene glycol. The amount of demulsifier added to the bio-broth was 4,830 µl of demulsifier composition per liter of broth. The bio-broth was separated using the same procedure as in Example 1 above. The results are as set forth in Table 7 below. On the scale, 5.0 ml phase separation was considered to be essentially complete separation.

**Table 7**

| Interface Level (ml) after Specified Centrifuge Time | | |
|---|---|---|
| Time | Control | KR-DP0320 4830 µl of demulsifier composition per liter of broth |
| 0.5 minutes | 10.0 | 5.1 |
| 1.0 minutes | 8.1 | 5.0 |
| 2.0 minutes | 7.2 | 4.95 |
| 5.0 minutes | 6.3 | 4.95 |

As shown in Table 6, the quaternary organopolysiloxane salt provided a significantly enhanced rate of separation and a higher degree of separation when compared to the untreated Control.

### Example 6:

The phase separation of a bio-broth consisting of a beef extract with peptones using toluene as the extraction solvent was evaluated. The bio-broth was a biologically based material with a very high protein content which acts as an emulsion stabilizer in aqueous/organic systems. The concentration of the broth was approximately 10% beef extract and peptones by weight with the remaining being deionized water. This bio-broth was mixed with toluene solvent at a ratio of 13 parts broth to 20 parts toluene. A demulsifying composition of the present invention containing KR-DP0320 quaternary organopolysiloxane salt and hexylene glycol carrier solvent, was added at a dosage rate of 3,000 microliters of quaternary organopolysiloxane salt composition per liter of bio-broth. The bio-broth was separated using the same procedure as in Example 1 above, except that the demulsifier and amount is as set forth in Table 8 below. On the scale, 3.8 ml phase separation was considered to be essentially complete separation.

**Table 8**

| Interface Level (ml) after Specified Centrifuge Time | | |
|---|---|---|
| Time | Control (No Demulsifier) | KR-DP0320 3,000 µl of demulsifier composition per liter of bio-broth |
| 0.5 minutes | 9.8 | 3.8 |
| 1.0 minutes | 9.5 | 3.8 |
| 2.0 minutes | 9.1 | 3.8 |
| 5.0 minutes | 6.6 | 3.8 |

As shown in Table 8, the presence of a quaternary organopolysiloxane salt provided a significantly enhanced rate of separation and a higher degree of separation when compared to the untreated Control.

## Claims

1. A composition for demulsifying an emulsion comprising an aqueous phase and an organic phase, the composition comprising at least one organopolysiloxane or salt thereof in an amount effective to at least partially separate the aqueous phase from the organic phase, wherein the emulsion comprises one or more components selected from the group consisting of microorganisms, enzymes, proteins, lipids, vitamins, carbohydrates, fats, amino acids or mixtures thereof
wherein the organopolysiloxane or salt thereof is represented by Formula (I):
(R-O)-CH₂CH(OH)CH₂-R' (I)
wherein:
R is 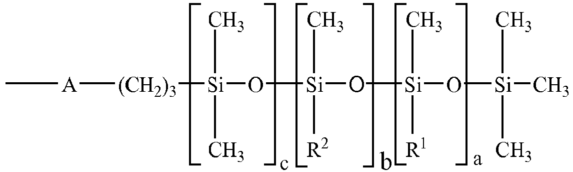 wherein A is selected from the group consisting of:
a bond, -(CH₂CH₂O)ₓ-, 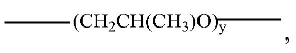 and combinations thereof; or, 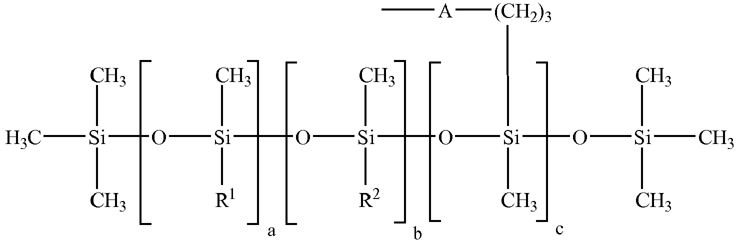 wherein A is selected from the group consisting of:
a bond, -(CH₂CH₂O)ₓ-, and 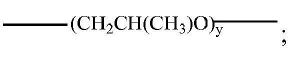 a is an integer from 0 to 200;
b is an integer from 0 to 200;
c is an integer from 1 to 200;
each R¹, if present, is selected from -(CH₂)ₙCH₃ and phenyl wherein n is an integer from 0 to 10;
each R², if present, is -(CH₂)₃-(OCH₂CH₂)ₓ-(OCH₂CH(CH₃))_{y}-(OCH₂CH₂)_{z}-OH; R' is selected from:
(a) 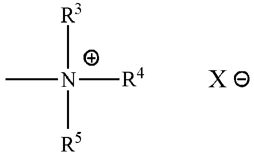 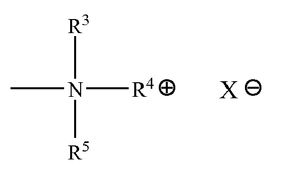 wherein R³, R⁴, and R⁵ are each independently alkyl having from 1 to 20 carbon atoms, and X is an ion selected from the group consisting of Cl, Br, CH₃SO₄ and CH₃CH₂SO₄;
(b) 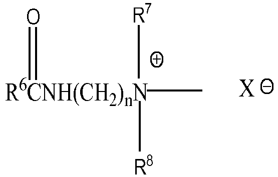 wherein R⁶ is alkyl having from 6 to 20 carbon atoms; R⁷ and R⁸ are independently selected from the group consisting of methyl and ethyl; and n is an integer from 1 to 5, and X is an ion selected from the group consisting of
Cl, Br, CH₃SO₄ and CH₃CH₂SO₄; and
(c) 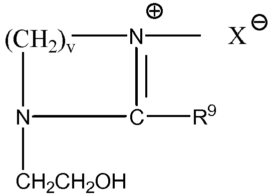 wherein R⁹ is alkyl having from 6 to 20 carbon atoms; and v is an integer from 1 to 5, and X is an ion selected from the group consisting of Cl, Br, CH₃SO₄
and CH₃CH₂SO₄; and
each x, y and z are independently selected integers each ranging from 0 to 20.

2. The composition according to claim 1, wherein the emulsion comprises spinosads.

3. The composition according to claim 1, wherein the organopolysiloxane or salt thereof is represented by Formula (I), wherein R is 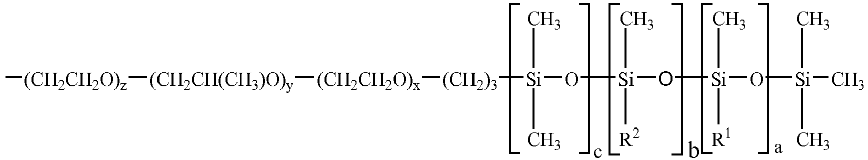 wherein x, y and z are integers and are each independently selected from 0 to 20, and
a, b, c, R¹ and R² are as set forth in claim 1.

4. The composition according to claim 1, wherein the composition further comprises at least one quaternary epihalohydrin/polyamine polymer or salt thereof.

5. The composition according to claim 4, wherein the quaternary epihalohydrin/polyamine polymer or salt thereof is a quaternary fatty epihalohydrin/polyamine polymer or salt thereof.

6. The composition according to claim 1, wherein the composition further comprises at least one (poly)diallyldimethylammonium halide.

7. The composition according to claim 1, wherein the composition further comprises at least one additive selected from the group consisting of demulsifiers different from the cationic quaternary ammonium organopolysiloxane, non-ionic polysiloxanes, surfactants, wetting agents, compatibilizers and coupling agents.

8. A method for demulsifying an emulsion comprising an aqueous phase and an organic phase, comprising (a) adding an effective amount of a composition according to claim 1 to an emulsion comprising an aqueous phase and an organic phase, wherein the emulsion comprises microorganisms, enzymes or spinosads.

9. The method according to claim 8, wherein the emulsion comprises spinosads.

## Patentansprüche

1. Zusammensetzung zum Demulgieren einer Emulsion, die eine wässrige Phase und eine organische Phase umfasst, wobei die Zusammensetzung mindestens ein Organopolysiloxan oder ein Salz davon in einer Menge umfasst, die wirksam ist, um die wässrige Phase zumindest teilweise von der organischen Phase abzuscheiden, wobei die Emulsion einen oder mehrere Bestandteile umfasst, die aus der Gruppe ausgewählt sind, die aus Mikroorganismen, Enzymen, Proteinen, Lipiden, Vitaminen, Kohlenhydraten, Fetten, Aminosäuren oder Mischungen daraus besteht,
wobei das Organopolysiloxan oder das Salz davon durch die Formel (I) dargestellt ist:
(R-O)-CH₂CH(OH)CH₂-R' (I)
wobei:
R 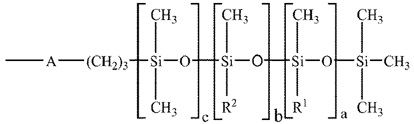 ist, wobei A aus der Gruppe ausgewählt ist, die aus Folgendem besteht:
einer Bindung, -(CH₂CH₂O)ₓ-, 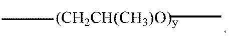 und Kombinationen daraus, oder 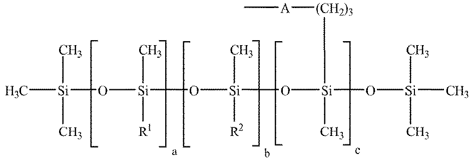 wobei A aus der Gruppe ausgewählt ist, die aus Folgendem besteht:
einer Bindung, -(CH₂CH₂O)ₓ- und 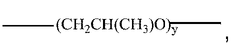 a eine ganze Zahl von 0 bis 200 ist,
b eine ganze Zahl von 0 bis 200 ist,
c eine ganze Zahl von 1 bis 200 ist,
jedes R¹, falls vorhanden, aus -(CH₂)ₙCH₃ und Phenyl ausgewählt ist, wobei n eine ganze Zahl von 0 bis 10 ist,
jedes R², falls vorhanden, -(CH₂)₃-(OCH₂CH₂)ₓ-(OCH₂CH(CH₃))_{y}-(OCH₂CH₂)_{z}-OH ist, R' ausgewählt ist aus:
(a) 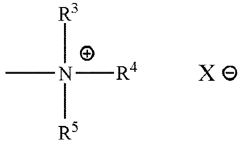 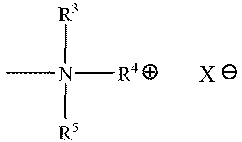 wobei R³, R⁴ und R⁵ jeweils unabhängig Alkyl mit 1 bis 20 Kohlenstoffatomen ist und X ein Ion ist, das aus der Gruppe ausgewählt ist, die aus Cl, Br, CH₃SO₄ und CH₃CH₂SO₄ besteht,
(b) 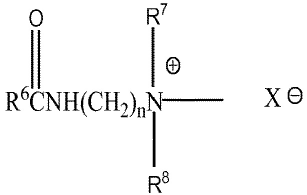 wobei R⁶ Alkyl mit 6 bis 20 Kohlenstoffatomen ist, R⁷ und R⁸ unabhängig aus der Gruppe ausgewählt sind, die aus Methyl und Ethyl besteht, und n eine ganze Zahl von 1 bis 5 ist und X ein Ion ist, das aus der Gruppe ausgewählt ist, die aus
Cl, Br, CH₃SO₄ und CH₃CH₂SO₄ besteht, und
(c) 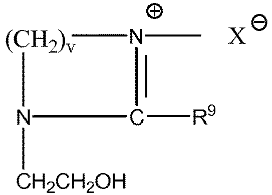 wobei R⁹ Alkyl mit 6 bis 20 Kohlenstoffatomen ist und v eine ganze Zahl von 1 bis 5 ist und X ein Ion ist, das aus der Gruppe ausgewählt ist, die aus Cl, Br, CH₃SO₄
und CH₃CH₂SO₄ besteht, und
jedes x, y und z eine unabhängig ausgewählte ganze Zahl im Bereich von 0 bis 20 ist.

2. Zusammensetzung nach Anspruch 1, wobei die Emulsion Spinosade umfasst.

3. Zusammensetzung nach Anspruch 1, wobei das Organopolysiloxan oder das Salz davon durch die Formel (I) dargestellt ist, wobei R 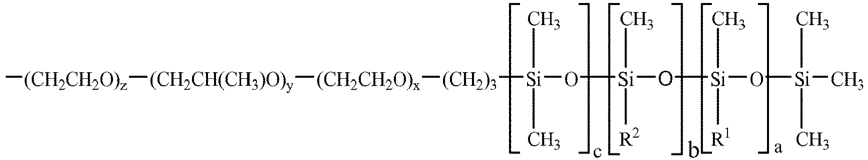 ist, wobei x, y und z ganze Zahlen sind und jeweils unabhängig aus 0 bis 20 ausgewählt sind, und a, b, c, R¹ und R² den Darlegungen in Anspruch 1 entsprechen.

4. Zusammensetzung nach Anspruch 1, wobei die Zusammensetzung ferner mindestens ein quaternäres Epihalohydrin-Polyamin-Polymer oder ein Salz davon umfasst.

5. Zusammensetzung nach Anspruch 4, wobei das quaternäre Epihalohydrin-Polyamin-Polymer oder das Salz davon ein quaternäres Epihalohydrin-Polyamin-Fettpolymer oder ein Salz davon ist.

6. Zusammensetzung nach Anspruch 1, wobei die Zusammensetzung ferner mindestens ein Polydiallyldimethylammoniumhalid umfasst.

7. Zusammensetzung nach Anspruch 1, wobei die Zusammensetzung ferner mindestens ein Additiv umfasst, das aus der Gruppe ausgewählt ist, die aus Demulgatoren, die sich von dem kationischen quaternären Ammoniumorganopolysiloxan unterscheiden, nichtionischen Polysiloxanen, Tensiden, Benetzungsmitteln, Verträglichkeitsvermittlern und Haftvermittlern besteht.

8. Verfahren zum Demulgieren einer Emulsion, die eine wässrige Phase und eine organische Phase umfasst, umfassend (a) das Zusetzen einer wirksamen Menge einer Zusammensetzung nach Anspruch 1 zu einer Emulsion, die eine wässrige Phase und eine organische Phase umfasst, wobei die Emulsion Mikroorganismen, Enzyme oder Spinosade umfasst.

9. Verfahren nach Anspruch 8, wobei die Emulsion Spinosade umfasst.

## Revendications

1. Composition de rupture d'émulsion renfermant une phase aqueuse et une phase organique, renfermant au moins un organopolysiloxane ou un sel dans une quantité efficace pour séparer au moins partiellement la phase aqueuse de la phase organique, l'émulsion renfermant au moins un composant choisi dans un groupe composé de microorganismes, d'enzymes, de protéines, de lipides, de vitamines, de glucides, de graisses, d'acides aminés ou d'un mélange correspondant, l'organopolysiloxane ou le sel correspondant étant représentés par la formule (I) :
(R-O)-CH₂CH(OH)CH₂-R' (I)
dans laquelle :
R correspond à 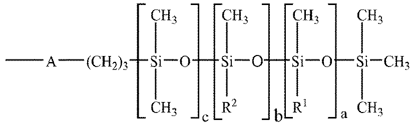 A étant choisi à partir du groupe composé :
d'un liant, -(CH₂CH₂O)ₓ-, 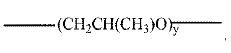 et des mélanges correspondants ; ou 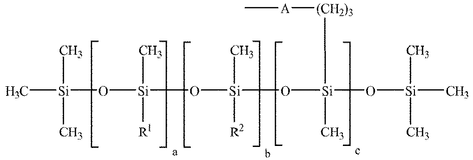 A étant choisi à partir du groupe composé :
d'un liant, -(CH₂CH₂O)ₓ- et 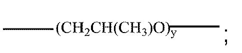 a est un entier de 0 à 200 ;
b est un entier de 0 à 200 ;
c est un entier de 1 à 200 ;
chaque R¹, si présent, est choisi à partir de -(CH₂)ₙCH₃ et phényle dans lequel n est un entier de 0 à 10 ;
chaque R², si présent est -(CH₂)₃-(OCH₂CH₂)ₓ-(OCH₂CH(CH₃))_{y}-(OCH₂CH₂)_{z}-OH; R' est choisi à partir de :
(a) 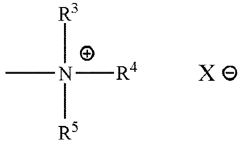 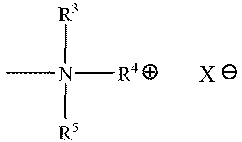 dans lequel R³, R⁴ et R⁵ sont des groupes alkyles indépendants les uns des autres ayant de 1 à 20 atomes de carbone et X est un ion choisi à partir du groupe constitué de Cl, Br, CH₃SO₄ et CH₃CH₂SO₄ ;
(b) 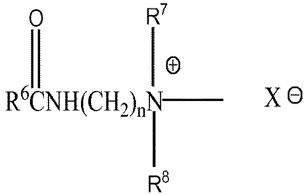 dans lequel R⁶ est un groupe alkyle ayant de 6 à 20 atomes de carbone ; R⁷ et R⁸ sont choisis indépendamment à partir du groupe constitué de méthyle et d'éthyle, n est un entier de 1 à 5 et X est un ion sélectionné à partir du groupe constitué de
Cl, Br, CH₃SO₄ et CH₃CH₂SO₄ ; et
(c) 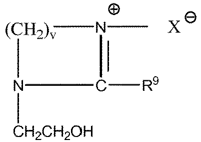 dans lequel R⁹ est un groupe alkyle ayant de 6 à 20 atomes de carbone, v est un entier de 1 à 5 et X est un ion choisi à partir du groupe constitué de Cl, Br, CH₃SO₄
et CH₃CH₂SO₄ ; et
x, y et z sont des entiers choisis indépendamment dont chacun est compris entre 0 et 20.

2. Composition selon la revendication 1, **caractérisée par le fait que** l'émulsion renferme des spinosads.

3. Composition selon la revendication 1, **caractérisée par le fait que** l'organopolysiloxane ou le sel sont représentés par la formule (I), dans laquelle R correspond à 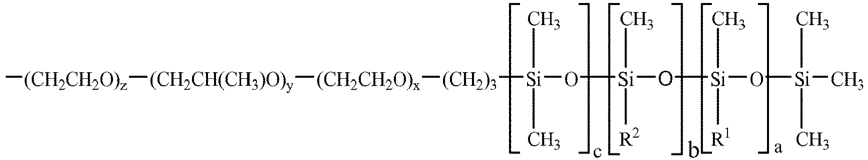 dans laquelle x, y et z sont des entiers et sont tous indépendamment choisis de 0 à 20 et a, b, c, R¹ et R² sont tels que le précise la revendication 1.

4. Composition selon la revendication 1, **caractérisée par le fait qu'**elle renferme également au moins un polymère quaternaire d'épihalohydrine/polyamine ou un sel correspondant.

5. Composition selon la revendication 4, **caractérisée par le fait que** le polymère quaternaire d'épihalohydrine/polyamine ou le sel correspondant est un polymère quaternaire gras d'épihalohydrine/polyamine ou un sel correspondant.

6. Composition selon la revendication 1, **caractérisée par le fait qu'**elle renferme également au moins un halogénure de (poly)diallyldiméthylammonium.

7. Composition selon la revendication 1, **caractérisée par le fait qu'**elle renferme également au moins un additif choisi parmi ceux du groupe composé d'agents de rupture d'émulsion différents de l'organopolysiloxane ammonium quaternaire cationique, des polysiloxanes non-ioniques, agents tensioactifs, agents mouillants, compatibilisateurs et agents d'accrochage.

8. Procédé de rupture d'émulsions renfermant une phase aqueuse et une phase organique, comprenant (a) l'ajout d'une quantité efficace d'une composition selon la revendication 1, à une émulsion renfermant une phase aqueuse et une phase organique, dans laquelle l'émulsion renferme des microorganismes, enzymes ou spinosads.

9. Procédé selon la revendication 8, dans laquelle l'émulsion renferme des spinosads.
